# EUROPÄISCHE PATENTSCHRIFT

(11) **EP 1 678 776 B1**
(45) Veröffentlichungstag und Bekanntmachung des Hinweises auf die Patenterteilung: **10.09.2008**
(21) Anmeldenummer: 04790839.7
(22) Anmeldetag: 26.10.2004
(51) Int. Cl.: H01M 8/04

(54) **BRENNSTOFFZELLENSYSTEM FÜR DEN MOBILEN EINSATZ MIT EINEM ADSORPTIONSSPEICHER**
FUEL CELL SYSTEM WHICH CAN BE USED IN A MOBILE MANNER WITH AN ADSORPTION ACCUMULATOR
SYSTEME DE PILES A COMBUSTIBLE DESTINE A UNE UTILISATION MOBILE AVEC UN ACCUMULATEUR D'ADSORPTION

(30) Priorität: 06.11.2003 DE 10351756
(43) Veröffentlichungstag der Anmeldung: 12.07.2006
(73) Patentinhaber: Daimler AG, 70327 Stuttgart (DE)
(72) Erfinder: SCHWAB, Clemens, 73240 Wendlingen (DE)
(86) Internationale Anmeldenummer: PCT/EP2004/012054
(87) Internationale Veröffentlichungsnummer: WO 2005/048386

(56) Entgegenhaltungen:
- EP-A- 0 989 290
- EP-A- 1 291 949
- US-B1- 6 195 999
- PATENT ABSTRACTS OF JAPAN Bd. 1998, Nr. 10, 31. August 1998 (1998-08-31) & JP 10 144333 A (DENSO CORP), 29. Mai 1998 (1998-05-29) in der Anmeldung erwähnt

## Beschreibung

Die Erfindung betrifft ein Brennstoffzellensystem für den mobilen Einsatz gemäß dem Oberbegriff des Anspruchs 1. Die Erfindung betrifft weiterhin ein Verfahren zum Betreiben eines derartigen Brennstoffzellensystems gemäß Anspruch 3.

Das Speicherprinzip von Sorptions- bzw. Adsorptionsspeichern beruht auf der Eigenschaft einiger hochporöser Materialien wie beispielsweise Silikagel, Wasserdampf anzuziehen und unter Wärmeabgabe an die Oberfläche des Materials zu binden. Diese Anlagerung von Wasser wird als Adsorption bezeichnet. Derartige Adsorptionsspeicher werden häufig als Trocknungsmittel in Verpackungen eingesetzt. Umgekehrt wird bei Erwärmung des Materials das gebundene Wasser in Form von Wasserdampf wieder freigesetzt bzw. desorbiert, während gleichzeitig der Speicher mit Wärmeenergie geladen wird. Dieser Prozess kann beliebig oft wiederholt werden. Adsorptionsspeicher können Wärmeenergie in hoher Dichte speichern.

Adsorptionsspeicher werden in der stationären Heizungstechnik verwendet, wo sie insbesondere für die energetische Verbesserung von solarthermischen Anlagen und Fernwärmeanlagen eingesetzt werden, indem sie für einen Ausgleich der Wärmeenergie bei zeitlichen Schwankungen sorgen.

Für mobile Anwendungen werden insbesondere zur Unterstützung eines so genannten Kaltstarts üblicherweise Heizungen eingesetzt, die auf thermoisolierten Heißwasserspeichern (so genannte sensible Wärmespeicherung), auf Speichern, welche den Phasenwechsel eines Stoffes ausnutzen (so genannte Latentwärmespeicherung) oder auf mobilen Feuerungsanlagen bzw. elektrischen Heizungen (Standheizung) basieren. Die Offenlegungsschrift WO 02/054520 A1 betrifft beispielsweise die Verwendung eines Latentwärmespeichers bei einer mobilen Brennstoffzellenanlage.

Adsorptionsspeicher haben ebenfalls den Weg in den mobilen Anwendungsbereich gefunden. So ist aus der Offenlegungsschrift DE 43 10 836 A1 bekannt, Adsorptionsspeicher in verbrennungsmotorisch angetriebenen Kraftfahrzeugen vorzusehen, wobei die von dem Adsorptionsspeicher gespeicherte Wärmemenge dazu genutzt werden kann, den Fahrzeuginnenraum oder auch eine das Fahrzeug antreibende Brennkraftmaschine vor einem Start zu erwärmen.

In der Patentanmeldung JP 10-144333 wird ein Adsorptionsspeicher zum Aufwärmen einer Brennstoffzelleneinheit eines Kraftfahrzeugs eingesetzt. Dem Adsorptionsspeicher ist ein Kondensator/Verdampfer zugeordnet, in dem Wasser zum Entladen des Adsorptionsspeichers zur Verfügung steht. Hat die Brennstoffzelleneinheit eine entsprechende Betriebstemperatur erreicht, so fungiert der Adsorptionsspeicher zusammen mit dem Kondensator und zwei diesen nachgeschalteten Wärmetauschern als Kühlung für die Brennstoffzelleneinheit, wobei einer der Wärmetauscher die Wärme der Brennstoffzelleneinheit an die Umgebungsluft abgibt. Das beschriebene System ist bezüglich des Wasserhaushalts ein geschlossenes System, bei dem kein Austausch von Wasser mit der Umwelt erfolgt. In dem Kondensator steht permanent Wasser zum Entladen des Adsorptionsspeichers zur Verfügung. Aus diesem Grunde ist ein Start mit dem beschriebenen System nur bei Temperaturen oberhalb des Gefrierpunkts möglich.

EP-A-1 291 949 gibt ein Brennstoffzellensystem an, bei dem eine Brennstoffzelle mit einem Adsorptionsspeicher für Wasserstoff in Verbindung steht. Der Speicher besitzt einen Wärmetauscher, der über ein Ventil in einen Kühlkreislauf stromab der Brennstoffzelle integriert ist. Um der Brennstoffzelle Wärme beim Start zur Verfügung zu stellen, wird beim Start Wasserstoff aus einem Behälter zum Adsorptionsspeicher geführt. Die dort erzeugte Wärme wird dann mittels eines Kühlkreislaufes der Brennstoffzelle zugeführt. Wenn die Brennstoffzelle ihre Betriebstemperatur erreicht hat, wird mittels des Kühlkreislaufes dem Adsorptionsspeicher Wärme zugeführt, so daß der in diesem gebundene Wasserstoff wieder freigesetzt und der Speicher in seinen Ausgangszustand zurückgeführt wird.

US-B1-6 195 999 beschreibt eine Anordnung in der eine Brennstoffzelle mit einem Hydridspeicher in Kontakt steht. Eine Beheizung des Hydridspeichers kann dabei durch einen stromabwärts angeordneten Wärmetauscher stattfinden.

In EP-A-0 989 290 wird die Kombination aus einer Brennstoffzelle und einem Wasserstofftank abgegeben, wobei eine Beheizung des Tanks durch Abwärme von der Brennstoffzelle mittels eines Wärmetransfermediums, d.h. einer Kühlflüssigkeit, stattfindet.

Es ist Aufgabe der Erfindung, ein Brennstoffzellensystem zu schaffen, welches einfach aufgebaut ist, wenig Bauraum bedarf und einen schnellen Kaltstart insbesondere bei Temperaturen unterhalb des Gefrierpunkts ermöglicht. Es ist weiterhin Aufgabe der Erfindung, ein Verfahren zum Betreiben eines derartigen Brennstoffzellensystems zu schaffen.

Die Aufgabe wird durch ein Brennstoffzellensystem mit den Merkmalen des Anspruchs 1 und ein Verfahren zum Betreiben eines solchen Brennstoffzellensystems mit den Merkmalen des Anspruchs 3 gelöst.

Das erfindungsgemäße Brennstoffzellensystem umfasst eine Brennstoffzelleneinheit zur Erzeugung elektrischer Energie und einen dieser Brennstoffzelleneinheit zugeordneten Adsorptionsspeicher zur Abgabe von Wärme. Der Adsorptionsspeicher steht mit einem Wärmetauscher in thermischer Wirkverbindung, der in einem der Brennstoffzelleneinheit zugeordneten Kühlkreislauf stromab der Brennstoffzelleneinheit angeordnet ist. Dem Adsorptionsspeicher werden über eine Leitung Brennstoffzellenabfallprodukte, d. h. Brennstoffzellenabgas bzw. Wasser in Form von Wasserdampf, zugeführt.

Gemäß dem erfindungsgemäßen Verfahren wird beim Starten des Brennstoffzellensystems das Kühlmittel des Kühlkreislaufes über den Wärmetauscher mittels der in dem Adsorptionsspeicher gespeicherten Wärme erhitzt, wobei gleichzeitig dem Adsorptionsspeicher Brennstoffzellenabgasprodukte, das heißt Wasser bzw. Wasserdampf, als Energieaustauschmedium zugeführt werden. Hierbei wird der Adsorptionsspeicher gekühlt. Ist der Kaltstart abgeschlossen und hat die Brennstoffzelleneinheit eine Temperatur erreicht, bei der keine weitere Erwärmung benötigt wird - befindet sich die Brennstoffzelleneinheit also im normalen Betrieb -, so wird dem Adsorptionsspeicher über den Wärmetauscher zur Aufladung wieder Wärme zugeführt und auf diese Weise das gespeicherte Wasser freigesetzt. Zum Aufladen des Adsorptionsspeichers wird vorzugsweise die Abwärme der Brennstoffzelleneinheit beim Betrieb des Brennstoffzellensystems bzw. eines Brennstoffzellenfahrzeugs genutzt.

Durch die Verwendung eines Adsorptionsspeichers steht ein Wärmespeicher mit hoher Energiedichte und wärmeverlustfreier Speicherung zur Verfügung, der vorteilhafterweise keine zusätzlichen Komponenten, die ebenfalls Energieverbraucher darstellen würden, benötigt, wie dies beispielsweise bei einer Elektroheizung, einem katalytischen Brenner, Standheizungen etc. der Fall wäre. Die Brennstoffzelleneinheit und gegebenenfalls weitere Komponenten des Brennstoffzellensystems können beim Kaltstart zuverlässig und ökonomisch erwärmt werden, da zur Ladung des Adsorptionsspeichers die Abwärme des Brennstoffzellensystems genutzt wird. Auf diese Weise bleibt die hohe Leistungsfähigkeit des Kühlmittels erhalten. Die Dauer der Wärmespeicherung ist zeitlich unbegrenzt und unabhängig von der Umgebungstemperatur.

Durch die im Vergleich zu anderen Wärmespeichern erhöhte Energiedichte des Adsorptionsspeichers, die etwa das 2,5- bis 5-fache beträgt, können Volumen und Gewicht beim Wärmespeicher bzw. den Wärmespeicherkomponenten eingespart werden. Weiteres Einsparpotenzial bzgl. Volumen und Gewicht ergibt sich durch die dem Adsorptionsspeicher inhärente verlustfreie thermochemische Wärmespeicherung. Der Adsorptionsspeicher kommt also mit einem geringeren Bauraum aus. Die für den Adsorptionsspeicher verwendeten Speichermaterialien bzw. -medien, die vorzugsweise Metallhydride, Silikagele und/oder Zeolithe umfassen, sind weder korrosiv, kontaminierend noch umweltgefährdend.

Bei dem erfindungsgemäßen Brennstoffzellensystem handelt es sich - auch in bezug auf den Wasserhaushalt - um ein offenes System, bei dem sowohl ein Energie- als auch ein Massenaustausch mit der Umwelt erfolgt. Insbesondere erfolgt ein Austausch von Wasser in der Form vom Wasserdampf mit der Umwelt. Es nicht erforderlich Wasser für das Entladen des Adsorptionsspeichers in einem zusätzlichen Reservoir zur Verfügung zu stellen. Dadurch wird vorteilhafterweise ein Einfrieren des Brennstoffzellensystems bei Temperaturen unter dem Gefrierpunkt verhindert und ein Start des Systems kann auch bei Temperaturen erfolgen, die unter dem Gefrierpunkt liegen.

Weitere vorteilhafte Ausgestaltungen der Erfindung ergeben sich aus den Unteransprüchen und den anhand der Zeichnung nachfolgend dargestellten Ausführungsbeispielen. Dabei zeigen:
- Fig. 1: eine schematische Darstellung eines erfindungsgemäßen Brennstoffzellensystems bei der Adsorptionsspeicherentladung bzw. beim Start und
- Fig. 2: eine schematische Darstellung des Brennstoffzellen-systems aus der Figur 1 bei der Adsorptionsspeicherbeladung.

In den Figuren sollen gleiche Bezugszeichen funktionell bzw. strukturell gleiche Komponenten kennzeichnen. Fluss- bzw. Strömungsrichtungen sind durch Pfeile symbolisiert.

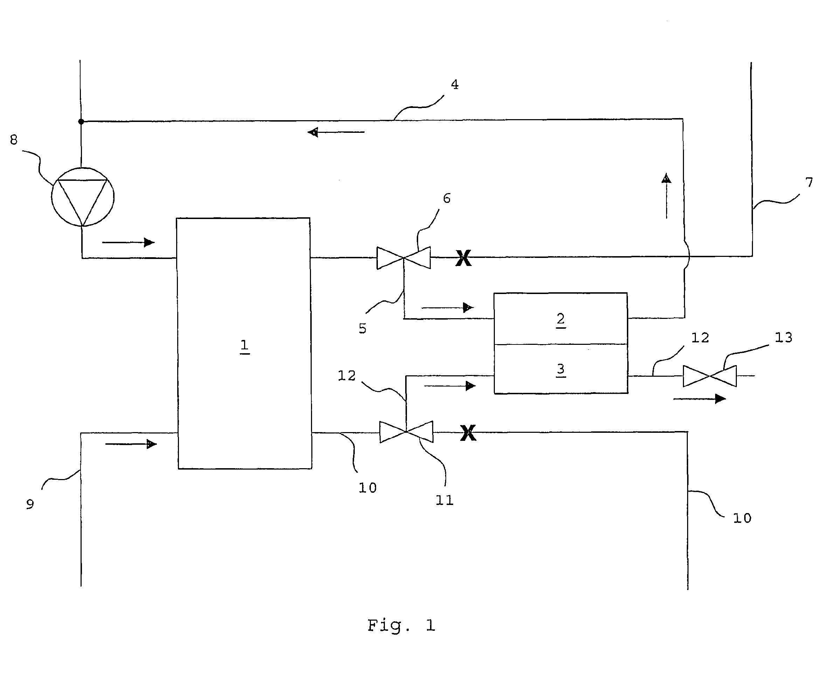

Die Figur 1 zeigt schematisch ein erfindungsgemäßes Brennstoffzellensystem beim Start, insbesondere beim Kaltstart. Das Brennstoffzellensystem umfasst eine Brennstoffzelleneinheit bzw. ein Brennstoffzellenmodul 1. Die Brennstoffzelleneinheit umfasst mehrere, nicht dargestellte Brennstoffzellen, die in Form eines so genannten Stacks miteinander verschaltet sind. Bei den verwendeten Brennstoffzellen handelt es sich vorzugsweise um Polymer-Elektrolyt-Membran-(PEM)-Brennstoffzellen. Der Brennstoffzelleneinheit 1 werden Wasserstoff und Sauerstoff in der Form von Luft als Reaktionskomponenten zugeführt. Bei den in der Brennstoffzelleneinheit ablaufenden elektrochemischen Reaktionen entstehen elektrische Energie, Wärme und als Abfallprodukt insbesondere Wasser in der Form von Wasserdampf. Der Luftsauerstoff wird der Brennstoffzelleneinheit 1 über eine Leitung 9 zugeführt. Die Brennstoffzellenabfallprodukte werden über eine Leitung 10 abgeführt. Eine Zuleitung für den Wasserstoff ist der Übersichtlichkeit halber nicht dargestellt.

Die Brennstoffzelleneinheit 1 ist in einem ersten, der Brennstoffzelleneinheit 1 zugeordneten Kühlkreislauf 4, 5 angeordnet, wobei vorzugsweise stromauf der Brennstoffzelleneinheit 1 eine Kühlmittelpumpe 8 zur Förderung von Kühlmittel vorgesehen ist. Außerdem ist in dem ersten Kühlkreislauf 4, 5 stromab der Brennstoffzelleneinheit 1 und vorzugsweise stromauf der Kühlmittelpumpe 8 ein Wärmetauscher 2 vorgesehen.

Der erste Kühlkreislauf 4, 5 ist bevorzugterweise mit einem zweiten Kühlkreislauf 7 gekoppelt, der im folgenden als Hauptkühlkreislauf 7 bezeichnet wird und beispielsweise der Kühlung bzw. Erwärmung eines Fahrzeuginnenraums dient. Zwischen Brennstoffzelleneinheit 1 und Wärmetauscher 2 ist in dem ersten Kühlkreislauf 4, 5 ein Stellglied 6, vorzugsweise ein Dreiwegeventil, angeordnet, über welches der Kühlmittelfluss einerseits über den Wärmetauscher 2 weiterhin in dem zweiten Kühlkreislauf 4, 5 oder direkt in den Hauptkühlkreislauf 7 geführt werden kann.

Der Wärmetauscher 2 steht mit einem Wärmespeicher 3, der als Adsorptionsspeicher ausgeführt ist, in thermischer Verbindung. Der Wärmetauscher 2 ist vorzugsweise mit seiner längsten Seite mit der längsten Seite des Adsorptionsspeichers 3 verbunden. In der Leitung 10, die die Brennstoffzellenabfallprodukte von der Brennstoffzelleneinheit 1 wegführt, ist ein Stellglied 11, vorzugsweise ein Dreiwegeventil, vorgesehen, über welches die Abfallprodukte über die Leitung 12, die als Bypass ausgeführt sein kann, durch den Adsorptionsspeicher 3 geleitet werden können.

Beim Start bzw. Kaltstart des Brennstoffzellensystems fließt das Kühlmittel in dem ersten Kühlkreislauf 4, 5 durch den Wärmetauscher 2. Es wird bevorzugterweise kein Kühlmittel in den Hauptkühlkreislauf 7 geleitet, was in der Figur 1 durch ein entsprechendes Kreuz in der Leitung 7 verdeutlicht werden soll. Es erfolgt also vorzugsweise keine Temperierung durch den Hauptkühlkreislauf 7. Gleichzeitig werden Brennstoffzellenabfallprodukte und somit Wasserdampf über die Leitungen 10 und 12 dem Adsorptionsspeicher 3 zugeführt. Die Abfallprodukte werden also durch entsprechende Stellung des Stellglieds 11 von der Leitung 10 in die Leitung 12 geführt, was in der Figur 1 durch ein Kreuz in der Leitung 10 stromab des Stellglieds 11 deutlich gemacht werden sollen.

Mit den Abfallprodukten bzw. der Abluft aus der Brennstoffzelleneinheit 1 wird dem Adsorptionsspeicher Wasserdampf zugeführt. Dieser Wasserdampf wird von dem Adsorptionsspeicher 3 unter Abgabe von Wärmeenergie gebunden, wobei die Wärmeenergie über den Wärmetauscher 2 dem Kühlmittel im ersten Kühlkreislauf 4, 5 und somit der Brennstoffzelleneinheit 1 zugeführt wird. Dies führt zu einer Erleichterung des Kaltstarts. Überschüssige Brennstoffzellenabfallprodukte bzw. - abluft werden vorzugsweise stromab des Adsorptionsspeichers 3 über die Leitung 12 und ein Stellglied 13, vorzugsweise ein geöffnetes Ventil, an die Umgebungsluft abgegeben.

Alternativ bzw. zusätzlich zur Zufuhr von Brennstoffzellenabfallprodukten zum Wärmetauscher 3 kann selbstverständlich ein Verdampfer vorgesehen sein, der Wasserdampf generiert und dem Wärmetauscher 3 zur Verfügung stellt.

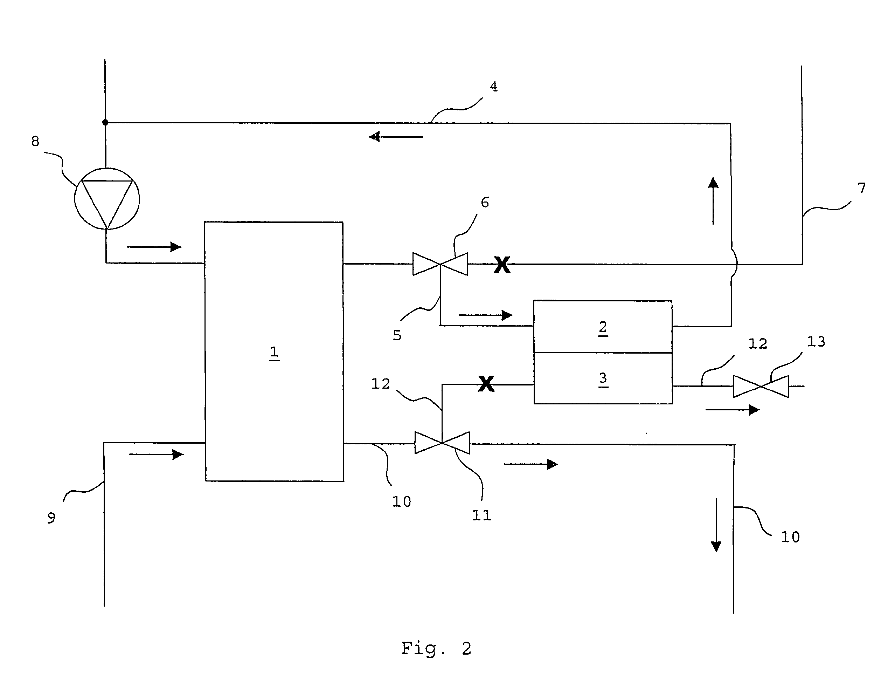

Die Figur 2 zeigt eine schematische Darstellung des Brennstoffzellensystems aus Figur 1 bei der Adsorptionsspeicherbeladung. Ist das Brennstoffzellensystem erfolgreich gestartet und wird keine weitere Wärmeenergie vom Adsorptionsspeicher 3 zum Aufheizen des Kühlmittels des ersten Kühlkreislaufs 4, 5 benötigt, so kann es erforderlich sein, den Adsorptionsspeicher 3 wieder mit Wärmeenergie zu beladen. Hierzu wird das nun von der im Betrieb befindlichen Brennstoffzelleneinheit 1 aufgeheizte Kühlmittel über das Stellglied 6 und die Leitung 5 durch den Wärmetauscher 2 geführt. Es wird vorzugsweise kein Kühlmittel in den Hauptkreislauf 7 geleitet, was durch ein entsprechendes Kreuz in der Leitung 7 gezeigt werden soll. Wegen der thermischen Verbindung von Wärmetauscher 2 und Adsorptionsspeicher 3 führt dies zu einer Erwärmung des Materials des Absorptionsspeichers 3 und somit zu einer Aufladung des Adsorptionsspeichers mit Wärmeenergie und zu einer Freisetzung des von dem Material gebundenen Wasserdampfes. Der freigesetzte Wasserdampf wird über die Leitung 12 und das Stellglied 13 stromab des Adsorptionsspeichers 3 vorzugsweise an die Umgebungsluft ausgeschieden.

Bevorzugterweise erfolgt bei der Aufladung des Adsorptionsspeichers 3 mit Wärme keine Zufuhr von Brennstoffzellenabfallprodukten über die Leitung 12. Dies ist in der Figur 2 durch ein Kreuz in der Leitung 12 gekennzeichnet.

Nach erfolgreicher Aufladung des Adsorptionsspeichers 3 werden vorzugsweise die Zufuhr von Brennstoffzellenabgasprodukten zum Adsorptionsspeicher 3 und die Abfuhr von Wasserdampf aus dem Adsorptionsspeicher 3 unterbunden, indem die Zufuhr zur Leitung 12 stromauf des Adsorptionsspeichers 3 mittels entsprechender Stellung der Stellglieds 11 und die Abfuhr aus der Leitung 12 stromab des Adsorptionsspeichers 3 durch entsprechende Stellung des Stellglieds 13 unterbunden werden, wenn keine Wärmeenergie zur Freisetzung des von dem Material des Adsorptionsspeicher 3 gebundenen Wasserdampfes benötigt wird bzw. wenn keine in dem Adsorptionsspeicher 3 gespeicherte Wärme zum Aufheizen des Brennstoffzellensystems 1 über das Kühlmittel des ersten Kühlkreislaufes 4, 5 benötigt wird. Dies hat den Vorteil das keine Umgebungsfeuchtigkeit von dem Material des Adsorptionsspeicher 3 angezogen werden kann. Ein Zufrieren bei Umgebungstemperaturen unter dem Gefrierpunkt ist ebenfalls sichergestellt. Die Abfuhr der Brennstoffzellenabgasprodukte kann nun über die Leitung 10 erfolgen. In diesem Betriebzustand, in dem die Aufgabe des Adsorptionsspeichers 3 darin besteht, die gebundene Wärmeenergie zu speichern, wird das von der im Betrieb befindlichen Brennstoffzelleneinheit 1 erwärmte Kühlmittel bevorzugterweise durch entsprechende Stellung des Stellglieds 6 in den Hauptkreislauf 7 geleitet, wobei vorzugsweise das Stellglied 6 derart geschaltet ist, das kein Kühlmittel dem Wärmetauscher 2 über die Leitung 5 zugeführt wird. Mittels des Hauptkreislaufs 7 kann beispielsweise ein Fahrgastinnenraum geheizt werden.

## Patentansprüche

1. Brennstoffzellensystem für den mobilen Einsatz mit einer Brennstoffzelleneinheit (1) zur Erzeugung elektrischer Energie und einem der Brennstoffzelleneinheit (1) zugeordneten Adsorptionsspeicher (3) zur Abgabe von Wärme,
wobei der Adsorptionsspeicher (3) in thermischer Wirkverbindung mit einem Wärmetauscher (2) steht, der in einem der Brennstoffzelleneinheit zugeordneten Kühlkreislauf (4, 5) stromab der Brennstoffzelleneinheit (1) angeordnet ist,
**dadurch gekennzeichnet,**
**dass** der Adsorptionsspeicher (3) über eine Leitung (10, 12) mit der Brennstoffzelleneinheit (1) verbunden ist und dass dem Adsorptionsspeicher (3) über diese Leitung (10, 12) Brennstoffzellenabfallprodukte zuführbar sind.

2. Brennstoffzelleneinheit nach Anspruch 1,
**dadurch gekennzeichnet,**
**dass** der Adsorptionsspeicher (3) ein Zeolith, ein Silikalgel und/oder ein Metallhydrid enthält.

3. Verfahren zum Betreiben eines Brennstoffzellensystems nach einem der Ansprüche 1 oder 2,
**dadurch gekennzeichnet,**
**dass**
- beim Starten des Brennstoffzellensystems Kühlmittel eines einer Brennstoffzelleneinheit (1) zugeordneten Kühlkreislaufes (4, 5) über einen Wärmetauscher (2) mittels in einem Adsorptionsspeicher (3) gespeicherter Wärme erhitzt wird, wobei dem Adsorptionsspeicher (3) gleichzeitig Brennstoffzellenabgasprodukte zugeführt werden und
- im normalen Betrieb dem Adsorptionsspeicher (3) über den Wärmetauscher (2) Wärme zugeführt wird.

## Claims

1. Fuel cell system for mobile use, with a fuel cell unit (1) for generating electric energy and with an adsorption accumulator (3) assigned to the fuel cell unit (1) for heat emission,
wherein the adsorption accumulator (3) is connected for thermal interaction to a heat exchanger (2) located in a cooling circuit (4, 5) assigned to the fuel cell unit downstream of the fuel cell unit (1),
**characterised in that**
the adsorption accumulator (3) is connected to the fuel cell unit (1) via a line (10, 12) and **in that** fuel cell waste products can be supplied to the adsorption accumulator (3) via the said line (10, 12).

2. Fuel cell unit according to claim 1,
**characterised in that**
the adsorption accumulator (3) contains a zeolite, a silica gel and/or a metal hydride.

3. Method for the operation of a fuel cell system according to claim 1 oor 2,
**characterised in that**
- when starting the fuel cell system, coolant from a cooling circuit (4, 5) assigned to a fuel cell unit (1) is heated via a heat exchanger (2) by means of heat stored in an adsorption accumulator (3), while simultaneously fuel cell exhaust gas products are supplied to the adsorption accumulator (3), and **in that**
- heat is supplied to the adsorption accumulator (3) via the heat exchanger (2) in normal operation.

## Revendications

1. Système de cellule ou de pile à combustible pour l'utilisation mobile, comprenant une unité à cellule ou pile à combustible (1) pour produire de l'énergie électrique et un accumulateur d'adsorption (3) associé à l'unité de pile à combustible (1) et destiné à délivrer de la chaleur,
l'accumulateur d'adsorption (3) étant en liaison interactive thermique avec un échangeur de chaleur (2) qui est agencé, dans un circuit de refroidissement (4, 5) associé à l'unité de pile à combustible, en aval de l'unité de pile à combustible (1),
**caractérisé en ce que**
l'accumulateur d'adsorption (3) est relié par l'intermédiaire d'une conduite (10, 12) à l'unité de pile à combustible (1), et **en ce qu'**à l'accumulateur d'adsorption (3) peuvent être amenés, par l'intermédiaire de cette conduite (10, 12), des produits de déchets de pile à combustible.

2. Unité de pile à combustible selon la revendication 1,
**caractérisée en ce que**
l'accumulateur d'adsorption (3) renferme une zéolithe, un gel de silice ou silica gel et/ou un hydrure métallique.

3. Procédé pour faire fonctionner un système de pile à combustible selon l'une des revendications 1 ou 2,
**caractérisé en ce que**
- lors du démarrage du système de pile à combustible, du fluide de refroidissement d'un circuit de refroidissement (4, 5) associé à une unité de pile à combustible (1), est échauffé par l'intermédiaire d'un échangeur de chaleur (2) au moyen de la chaleur stockée dans un accumulateur d'adsorption (3), des produits de gaz d'échappement de la pile à combustible étant amenés à l'accumulateur d'adsorption (3), et
- en fonctionnement normal, de la chaleur est amenée à l'accumulateur d'adsorption (3) par l'intermédiaire de l'échangeur de chaleur (2).
